# EUROPÄISCHE PATENTSCHRIFT

(11) **EP 3 252 304 B1**
(45) Veröffentlichungstag und Bekanntmachung des Hinweises auf die Patenterteilung: **27.07.2022**
(21) Anmeldenummer: 17174029.3
(22) Anmeldetag: 01.06.2017
(51) Int. Cl.: F03D 1/06, F03D 13/10

(54) **ANORDNUNG ZUR HORIZONTALEN VORMONTAGE EINES WINDENERGIEANLAGENROTORS**
ARRANGEMENT FOR HORIZONTAL PRE-ASSEMBLY OF A WIND TURBINE ROTOR
SYSTÈME DE PRÉMONTAGE HORIZONTAL D'UN ROTOR D'ÉOLIENNE

(30) Priorität: 01.06.2016 DE 102016006572
(43) Veröffentlichungstag der Anmeldung: 06.12.2017
(73) Patentinhaber: Siemens Gamesa Renewable Energy Service GmbH, 20097 Hamburg (DE)
(72) Erfinder: Schledde, Bernd, 33397 Rietberg (DE); Lütjen, Jan, 25585 Lütjenwestedt (DE)
(74) Vertreter: Glawe, Delfs, Moll

(56) Entgegenhaltungen:
- EP-A1- 2 256 079
- EP-A1- 2 778 389
- KR-B1- 101 614 497
- US-A1- 2011 132 239

## Beschreibung

Die Erfindung betrifft eine Anordnung zur horizontalen Vormontage eines Windenergieanlagenrotors.

Bei der Errichtung von Windenergieanlagen ist es als eine von mehreren Möglichkeiten bekannt, den Rotor der Windenergieanlage umfassend die Rotornabe und die Rotorblätter am Boden in liegender Position vorzumontieren und anschließend den Rotor als Ganzes mit Hilfe eines Montagekrans an die auf dem Turm montierte Gondel heranzuführen und dort zu befestigten.

Um einen Rotor in liegender Position vormontieren zu können, sind im Stand der Technik verschiedene Vorrichtungen bekannt.

Für Offshore-Windenergieanlagen sind bspw. aus der EP 2 778 389 A1 schwimmende und/oder auf Stelzen auf dem Meeresgrund aufsetzbare Plattformen bekannt, auf deren Oberseite Montagehilfsmittel angeordnet sind, an denen zunächst die Rotornabe mit vertikaler Ausrichtung der Rotornabenachse befestigt wird, bevor daran die einzelnen Rotorblätter befestigt werden. Die während der Montage auf das Montagehilfsmittel einwirkenden Kräfte und Momente können aufgrund der festen Verbindung des Montagehilfsmittels über die Plattform in den Meeresboden abgeleitet werden. Aufgrund der großen Ausdehnung der Plattform, deren Abmaße regelmäßig in der Größenordnung der Länge eines Rotorblatts der zu montierenden Windenergieanlage liegt, lassen sich insbesondere die Momente bei nur einem teilweise montierten Rotor gut ableiten. Es sind dennoch Ausführungen bekannt, bei denen die an die Rotornabe montierten Rotorblätter durch zusätzliche Hilfsgerüste gestützt werden müssen, um das Montagehilfsmittel zu entlasten.

Für Onshore-Windenergieanlagen sind Montagehilfsmittel bekannt, auf denen eine Rotornabe bodennah mit vertikaler Ausrichtung der Rotornabenachsen befestigt werden kann, bevor die Rotorblätter an der Rotornabe befestigt werden. Um die auf das Montagehilfsmittel einwirkenden Momente, die insbesondere entstehen, wenn noch nicht sämtliche Rotorblätter an der Rotornabe montiert sind, auszugleichen, sind verschiedene Möglichkeiten bekannt. Zum einen können die einzelnen, bereits montierten Rotorblätter durch zusätzliche Montagestützen derart unterstützt werden, dass sie kein oder nur ein geringes Moment auf die Rotornabe ausüben. Auch ist es möglich, dass das Montagehilfsmittel lange Stützfüße aufweist, die sich sternförmig erstrecken, um so die Auflagefläche des Montagehilfsmittels zu vergrößern. Eine entsprechende Vorrichtung ist aus der KR 10-1614497 bekannt. Alternativ dazu ist es möglich, das Montagehilfsmittel mit einer hohen Eigenmasse auszugestalten.

Den bekannten Montagehilfsmitteln für den Rotor von Onshore-Windenergieanlagen ist gemein, dass es sich um teils aufwendige Spezialkonstruktionen handelt, die regelmäßig hohe Transportkosten für den Transport von einem Aufstellort zum nächsten erfordern. Die hohen Transportkosten resultieren dabei aus der hohen Masse des Montagehilfsmittels, insbesondere wenn das Montagehilfsmittel eine hohe Eigenmasse zum Ausgleich von während der Montage auftretenden Momenten aufweist, ausladender Dimensionen, insbesondere wenn lange Stützfüße vorgesehen sind, oder, insbesondere bei zusätzlichen Montagestützen, in der Anzahl der erforderlichen Komponenten und dem daraus resultierenden erforderlichen Transportvolumen.

Aufgrund der bodennahen Montage des Rotors bei den aus dem Stand der Technik bekannten Montagehilfsmitteln ergibt sich weiterhin das Problem, dass während der Montage des Rotors bis zu seiner Montage an der Gondel der Windenergieanlage der Montageplatz des Rotors, der zur späteren Montage an der Gondel grundsätzlich unmittelbar neben dem Fundament bzw. dem Turm der Windenergieanlage angeordnet ist, den Baustellenbereich einengt bzw. die Bewegungsfreiheit in diesem stark einschränkt. Weiterer Stand der Technik ist in EP 2 256 079 A1 offenbart.

Aufgabe der vorliegenden Erfindung ist es eine Anordnung zur horizontalen Vormontage eines Windenergieanlagenrotors zu schaffen, bei denen die Nachteile aus dem Stand der Technik nicht mehr oder nur noch im verminderten Umfang auftreten.

Gelöst wird diese Aufgabe durch eine Anordnung gemäß dem Anspruch 1. Vorteilhafte Ausführungsformen sind Gegenstand der abhängigen Ansprüche.

Zunächst werden einige im Zusammenhang mit der Erfindung verwendete Begriffe erläutert.

"Turmsystem eines Hochbaukrans" bezeichnet das System zur Erstellung des Turms eines mobil einsetzbaren Turmdrehkrans, insbesondere eines oben-drehenden Turmdrehkrans. Entsprechende Turmsysteme werden von verschiedenen Herstellern angeboten und umfassen ein Grundsegment auf dem einzelne Turmsegmente angeordnet werden, um letztendlich den Turm des Krans mit einer gewünschten Höhe zu bilden. Die einzelnen Segmente - Grund- und Turmsegmente - sind dabei so ausgestaltet und dimensioniert, dass sie sich ohne weiteres per Lastkraftwagen zu dem gewünschten Aufstellort des Turmkrans transportieren lassen und umfassen Schnittstellen zur Verbindung mit weiteren Segmenten. Das Grundsegment umfasst regelmäßig höheneinstellbare Füße zum Ausgleich von Unebenheiten der Aufstellfläche und kann entweder durch ausreichende Ballastierung oder durch Verbindung mit einem vorbereiteten Fundament dem Turmkran seine Stabilität verleiht.

Mit "Ebene des Rotorflansches" ist diejenige Ebene gemeint, die durch die Auflagefläche des Flansches, auf der die Rotornabe zu liegen kommt, gebildet wird.

Indem die Adaptervorrichtung auf bekannten und darüber hinaus regelmäßig lokal verfügbaren Turmsystemen aufbaut, werden verschiedene Vorteile gegenüber dem Stand der Technik erzielt.

Da bei der erfindungsgemäßen Anordnung auf lokal regelmäßig verfügbare Turmsysteme zurückgegriffen werden kann, beschränkt sich der Transport des Montagehilfsmittels für den Rotor einer Windenergieanlage von einem Aufstellort zum nächsten auf die Adaptervorrichtung. Das Turmsystem kann lokal bereitgestellt werden, bspw. durch lokale Verleiher von Hochturmkränen mit geeigneten Turmsystemen. Es kann so vermieden werden, dass ein hohes Transportvolumen und/oder ein hohes Transportgewicht über teils lange Strecken transportiert werden muss.

Darüber hinaus ermöglicht die Verwendung der Adaptervorrichtung auf einem Turmsystem eine vom Boden beabstandete Montage des Rotors. Indem das Turmsystem umfassend ein Grundsegment und wenigstens ein Turmsegment bereits zwingend eine gewisse Höhe aufweist, ist ein auf einer darauf angerordneten Adaptervorrichtung montierter Rotor einer Windenergieanlage derart vom Boden beabstandet, dass wenigstens ein Durchgehen unter dem Rotor hindurch regelmäßig möglich ist. Durch das evtl. Vorsehen weiterer Turmsegmente beim Turmsystem kann der Abstand zwischen Boden und Rotor auch derart planvoll gewählt werden, dass eine beliebige gewünschte Durchgangshöhe, bspw. um Hindurchfahren mit Fahrzeugen oder sonstigen Geräten zu gewährleisten, erreicht wird. Auch kann erreicht werden, den Rotor oberhalb von sog. Bestandshindernissen, wie Bäumen, zu montieren, sodass diese nicht beseitigt werden müssen, z.B. durch Fällung. Zudem wird durch die Montagevorrichtung die Rotormontage bei Hanglage ermöglicht, indem der Rotor so weit erhöht wird, dass die zum Hang gerichteten Blätter horizontal positioniert werden können.

Insbesondere gegenüber dem Stand der Technik, bei dem die Montagehilfe lange Stützfüße benötigt, ist bei der erfindungsgemäßen Anordnung weiterhin eine deutlich geringere Bodenfläche erforderlich. In der Folge lassen sich regelmäßig auch die Kosten für die Einebnung und Befestigung der für die Vormontage des Rotors benötigten Fläche reduzieren.

Das Anschlussstück zur Befestigung der Adaptervorrichtung auf einem Turmsystem eines Hochbaukrans kann individuell an ein bestimmtes Turmsystem angepasst sein. Es ist aber bevorzugt, wenn das Anschlussstück derart ausgestaltet ist, dass es sich mit verschiedenen Turmsystemen, bspw. von verschiedenen Herstellern, verbinden lässt. Dadurch ist die Adaptervorrichtung variabel einsetzbar.

Es ist bevorzugt, wenn das Anschlussstück und der Rotorflansch im Wesentlichen koaxial angeordnet sind. Dadurch wird sichergestellt, dass zumindest die Gewichtskraft eines auf dem Rotorflansch vollständig montierten Rotors in das Turmsystem eingeleitet werden kann, ohne dass dabei unerwünschte (Biege-)Momente in der Adaptervorrichtung oder dem Turmsystem entstehen.

Erfindungsgemäß ist zwischen Anschlussstück und Rotorflansch eine den Rotorflansch umgebende Arbeitsplattform vorgesehen. Diese Arbeitsplattform ermöglicht den für die Montage des Rotors erforderlichen Zugang zum Rotorflansch bzw. einer darauf montierten Rotornabe, insbesondere da die Montage des Rotors mit der Adaptervorrichtung regelmäßig nicht bodennah erfolgt. Die Arbeitsplattform erfüllt vorzugsweise die jeweils einschlägigen HSE-Anforderungen (Health, Safety and Environment-Anforderungen; auf Deutsch:
Gesundheits-, Sicherheit- und Umwelt-Anforderungen). Dazu kann die Arbeitsplattform bspw. mit einem umlaufenden Geländer und/oder einer rutschfesten Oberfläche versehen sein.

Es ist bevorzugt, wenn der Rotorflansch gegenüber der Arbeitsplattform derart erhöht angeordnet ist, dass zwischen Rotorflansch und Arbeitsplattform ein Durchgang von der Arbeitsplattform zu einer im Bereich des Anschlussstücks angeordneten Durchstiegsöffnung in der Arbeitsplattform vorgesehen ist. Durch die Durchstiegsöffnung und den daran anschließenden Durchgang ist ein Zugang zur Arbeitsplattform über die bei Turmsystemen von Turmkränen regelmäßig vorgesehenen Steigleitern möglich. Ein gesonderter Zugang, bspw. über eine zusätzliche Leiter, ist dann entbehrlich.

Insbesondere wenn der Rotorflansch gegenüber der Arbeitsplattform erhöht angeordnet ist, ist bevorzugt, wenn ein Aufgang von der Arbeitsplattform zum Rotorflansch vorgesehen ist. Über den Aufgang wird ein auf dem Rotorflansch montierte Rotornabe bzw. deren Mannloch gut erreichbar und zugänglich. Ist der Aufgang fest mit der Adaptervorrichtung verbunden, wird dadurch die Arbeitssicherheit gegenüber bspw. lose aufgestellter Leitern verbessert.

Es ist bevorzugt, wenn die Adaptervorrichtung einen Auslegerarm aufweist, an dem ein Ballastgewicht zur Aufbringung eines Biegemoments auf die Adaptervorrichtung parallel zur Ebene des Rotorflansches befestigbar ist. Über den Auslegerarm und daran wahlweise befestigten Ballastgewichten können Momentenbelastungen auf die Adaptervorrichtung, die insbesondere während der Montage des Rotors aufgrund der nacheinander erfolgenden Befestigung der Rotorblätter an der Rotornabe entstehen können, ausgeglichen werden.

Der Auslegerarm ist vorzugsweise parallel zur Ebene des Rotorflansches verschwenkbar. Die Verschwenkbarkeit kann dabei bspw. durch das Vorsehen eines drehbar gelagerten Ring, an dem der Auslegerarm befestigt ist, erreicht werden. Alternativ ist es möglich, den Auslegerarm in einer, von vorzugsweise mehreren vorgegebenen, Positionen montierbar auszugestalten. In diesem Fall kann der Auslegerarm in der für den Ausgleich von Momentenbelastungen auf die Adaptervorrichtung erforderlichen Position montiert und mit Ballastgewicht beaufschlagt werden.

Vorzugsweise weist der Auslegerarm eine Verschiebevorrichtung zur Verschiebung des Ballastgewichtes entlang der Längsachse des Auslegerarms auf. Durch eine entsprechende Verschiebevorrichtung ist es möglich, das durch das Ballastgewicht auf die Adaptervorrichtung einwirkende Moment einzustellen.

Sofern erforderlich kann auf dem Rotorflansch der Adaptervorrichtung eine Drehvorrichtung befestigt sein, an der wiederrum die Rotornabe des zu montierenden Windenergieanlagenrotors befestigbar ist, wobei die Drehvorrichtung eine Drehung der Rotornabe in der Ebene des Rotorflansches gestattet. Indem die Drehvorrichtung vorzugsweise als gesondertes, an dem Rotorflansch befestigbares Bauteil ausgestaltet ist, kann sie wahlweise nur in den Fällen vorgesehen werden, in denen tatsächlich eine Drehung der Rotornabe bzw. des Rotors während der Montage, bspw. aufgrund von besonderen Gegebenheiten am Aufstellort, erforderlich ist. Es ist aber auch möglich, die Drehvorrichtung als integralen Bestandteil der Adaptervorrichtung vorzusehen.

Die Adaptervorrichtung ist vorzugsweise derart klapp- und/oder teleskopierbar, dass sie im zusammengelegten Zustand Außenabmaße von maximal 2,5 m x 2,75 m x 10 m aufweist, vorzugweise dass die Außenabmaße so gewählt sind, dass sich die Adaptervorrichtung in einem 40-Fuß-Standartcontainer, weiter vorzugsweise in einen 20-Fuß-Standartcontainer verladen lässt. Die Adaptervorrichtung lässt sich so auf ein Transportvolumen zusammenlegen, welches einen problemlosen Transport ohne Übermaß, insbesondere über die Straße und/oder per Schiff, ermöglicht.

Zur Erläuterung der erfindungsgemäßen Anordnung wird zunächst auf die vorstehenden Ausführungen verwiesen.

Das Turmsystem kann derart ausgeführt sein, dass seine Standfestigkeit über eine Ballastierung des Turmsystems erreicht wird. Der erforderliche Ballast ist dabei für das Gewicht und die Ausdehnung des zu montierenden Rotors geeignet zu wählen und wird vorzugsweise im unteren Bereich des Turmsystems, insbesondere am Fuß des Turmsystems angeordnet.

Alternativ ist es möglich, das Turmsystem an dem Fundament der zu errichtenden Windenergieanlage unmittelbar zu befestigen. Dazu werden bei der Errichtung des Fundaments der Windenergieanlage geeignete Anbindungspunkte vorgesehen, an denen das Turmsystem befestigt werden kann. Dabei sind das Turmsystem und die Adaptervorrichtung derart ausgestaltet und angeordnet, dass der Rotor parallel zum Turm der Windenergieanlage montiert werden kann. Es ist auch möglich, für das Turmsegment ein separates Fundament zu erstellen.

Es ist auch möglich, dass die Adaptervorrichtung oder das Turmsystem zur Abstützung am vorzugsweise auf demselben Fundament wenigstens teilweise am bereits errichteten Turm der Windenergieanlage ausgebildet ist. Dazu kann eine geeignete Abstützung am Turm der Windenergieanlage befestigt werden. Die Abstützung kann hierfür insbesondere eine Manschette, die um den Turm der Windenergieanlage gelegt wird aufweisen. Es kann aber auch ausreichend sein, wenn die Abstützung sich ausschließlich gegen den Turm lehnt, sodass die Abstützung lediglich Druckkräfte aufnehmen kann. Es ist auch möglich, eine Anbindung des Turmsystems an dem Turm vorzusehen, bei der eine form- und kraftschlüssige Verbindung zwischen Turmsystem und Turm geschaffen wird.

Das Turmsystem ist vorzugsweise so gewählt, dass bei der Verwendung der Anordnung die minimale Durchfahrtshöhe unter einem auf der Adaptervorrichtung montierten Windenergieanlagenrotors wenigstens 4,5 m, vorzugsweise wenigstens 8 m beträgt, weiter vorzugsweise wenigstens 9,5 m beträgt. Dazu kann das Turmsystem bspw. mehrere Turmsegmente umfassen, um die letztendlich gewünschte Durchfahrtshöhe zu erreichen.

Gleichzeitig ist bevorzugt, wenn bei der Verwendung der Anordnung die maximale Höhe eines auf der Adaptervorrichtung montierten Windenergieanlagenrotors über dem Grund 40 m, vorzugsweise 35 m, weiter vorzugsweise 25 m beträgt. Durch eine entsprechende maximale Höhe kann sichergestellt werden, dass der Windenergieanlagenrotor mit vergleichsweise kleinen bzw. niedrigen Kränen montierbar ist und ein Großkran lediglich für die Montage des vormontierten Rotors an der Gondel der Windenergieanlage gebraucht wird.

Die Erfindung wird nun anhand von vorteilhaften Ausführungsformen unter Bezugnahme auf die beigefügten Zeichnungen beispielhaft beschrieben. Es zeigen:
- Figur 1:: ein erstes Ausführungsbeispiel einer erfindungsgemäßen Anordnung mit einer Adaptervorrichtung und darauf montiertem Rotor;
- Figur 2:: eine Detaildarstellung der Adaptervorrichtung aus Figur 1;
- Figur 3:: eine Detaildarstellung des Turmsystems aus Figur 1; und
- Figur 4:: ein zweites Ausführungsbeispiel einer erfindungsgemäßen Anordnung mit einer Adaptervorrichtung.

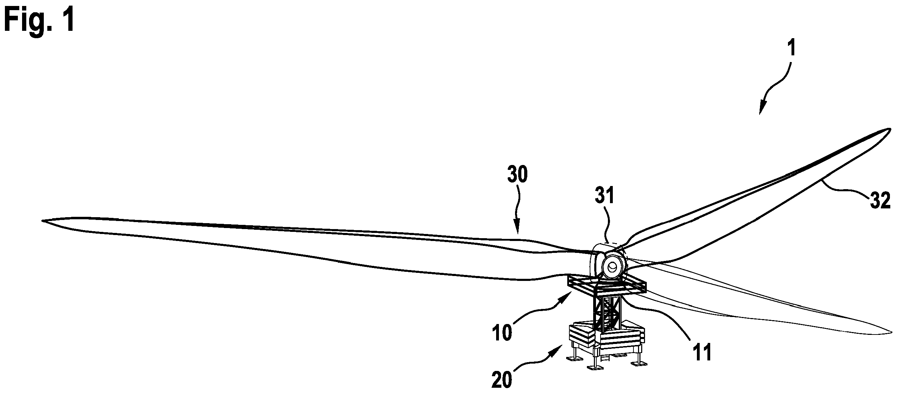

In Figur 1 ist ein erstes Ausführungsbeispiel einer erfindungsgemäßen Anordnung 1 zur horizontalen Vormontage eines Windenergieanlagenrotors gezeigt. Die Anordnung 1 umfasst eine Adaptervorrichtung 10 und ein Turmsystem 20. Auf der Anordnung 1 ist bereits der Rotor 30 einer Windenergieanlage vormontiert, wobei die Montage des Rotors 30 in horizontaler Lage erfolgt.

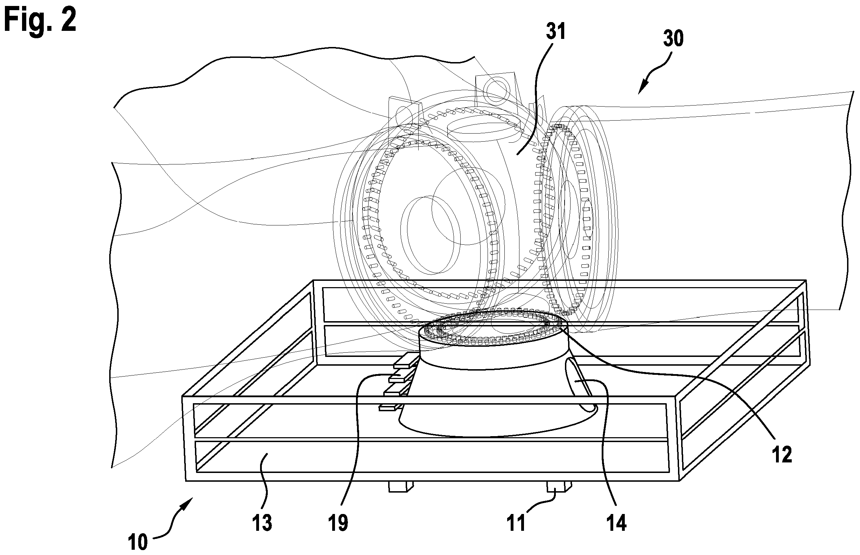

In Figur 2 ist die Adaptervorrichtung 10 aus Figur 1 detaillierter dargestellt.

Die Adaptervorrichtung 10 weist an seiner Unterseite ein Anschlussstück 11 auf, mit dem die Adaptervorrichtung 10 an einem Turmsystem 20 (vgl. Figur 1) befestigt werden kann. Auf der Oberseite der Adaptervorrichtung 10 ist ein Rotorflansch 12 vorgesehen, an dem die Rotornabe 31 des zu montierenden Rotors 30 befestigt werden kann. Für die Befestigung kann die Rotornabe 31 an den Rotorflansch 12 angeschraubt werden, der hierfür entsprechende Durchgangslöcher oder Stehbolzen aufweist. Das Anschlussstück 11 und der Rotorflansch 12 sind im dargestellten Ausführungsbeispiel koaxial angeordnet, auch wenn dies nicht zwingend erforderlich ist.

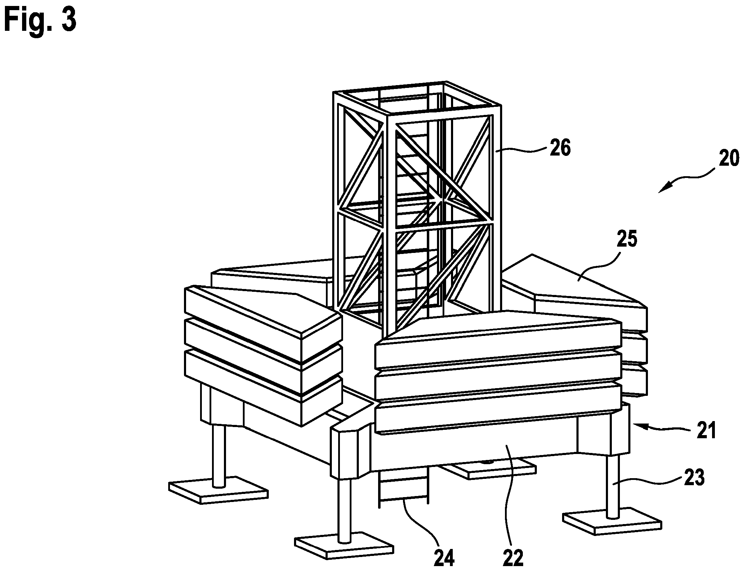

Zwischen dem Anschlussstück 11 und dem Rotorflansch 12 ist eine umlaufende, HSE-konforme Arbeitsplattform 13 vorgesehen. Die Arbeitsplattform 13 ist dabei so weit unterhalb des Rotorflansches 12 angeordnet, dass ein Durchgang 14 von der Arbeitsplattform 13 zu einer (in Figur 2 nicht sichtbaren) Durchstiegsöffnung in der Arbeitsplattform 13 vorgesehen sein kann. Die Durchstiegsöffnung ist dabei so gegenüber dem Rotorflansch 12 und damit auch mit dem Anschlussstück 11 angeordnet, dass es dem Leitersystem des Turmsystems 20 entspricht, und ermöglicht es, bei der erfindungsgemäßen Anordnung (vgl. Figur 1) über eine regelmäßig am Turmsystem 20 vorgesehene Aufstiegsleiter 24 (vgl. Figur 3) durch die Durchstiegsöffnung und den Durchgang 14 auf die Arbeitsplattform 13 zu gelangen. Im dargestellten Ausführungsbeispiel ist die Durchstiegsöffnung koaxial mit dem Rotorflansch 12 und damit auch mit dem Anschlussstück 11 angeordnet.

Um von der Arbeitsplattform 13 aus den Rotorflansch 12 bzw. eine daran befestigte Rotornabe 31 gut erreichen zu können, ist ein Aufgang 19 vorgesehen, der fest an der Adaptervorrichtung 10 angeordnet ist. Über diesen Aufgang 19 ist das an der Rotornabe 31 regelmäßig vorgesehene Mannloch (nicht dargestellt) zu erreichen.

In Figur 3 ist das Turmsystem 20, welches bei der Anordnung 1 in Figur 1 verwendet wird, näher dargestellt.

Das Turmsystem 20 umfasst ein Grundsegment 21 umfassend einen Kreuzrahmen 22 mit daran angeordneten höheneinstellbaren Füßen 23, mit denen Bodenunebenheiten ausgeglichen werden können. Auch wird durch die Füße 23 sichergestellt, dass der Kreuzrahmen 22 wenigstens 1,5 m vom Boden beabstandet ist, sodass die innen durch das Grundsegment 21 geführte Aufstiegsleiter 24 erreichbar ist. Außerdem lässt sich das Turmsystem 20 dadurch mit einem geeigneten Fahrzeug - wie bspw. einem LKW mit Anhebevorrichung auf der Ladefläche - leicht umsetzen. Dies ist insbesondere beim Aufbau eines Windparks vorteilhaft.

Das Grundsegment 21 ist mit Ballaststeinen 25 derart ballastiert, dass ausreichende Standfestigkeit des Turmsystems 20 bzw. der erfindungsgemäßen Anordnung (vgl. Figur 1) erreicht wird. Die Ballastierung des Grundsegments 21 ist dabei in erster Linie in Abhängigkeit der Ausgestaltung und dem Gewicht des zu montierenden Rotors 30 bzw. dessen Komponenten, insbesondere der Rotorblätter 32 zu wählen, insbesondere auch im Hinblick auf Windfestigkeit.

Auf dem Grundsegment 21 ist ein einzelnes Turmsegment 26 angeordnet. Sofern eine größere Höhe des Turmsystems 20 erforderlich ist, können auch noch weitere Turmsegmente 26 vorgesehen sein. Durch alle Turmsegmente 26 erstreckt sich dabei die Aufstiegsleiter 24.

Bei der in Figur 1 dargestellten Anordnung 1 ist die Höhe des Turmsystems 20 so gewählt, dass die lichte Höhe unterhalb der Rotorblätter 32 des fertig montierten Rotors 30 10 m beträgt, wodurch der typische Baustellenverkehr bei der Errichtung von Windenergieanlagen nicht behindert wird. Gleichzeitig befindet sich der Rotor 30 aus der Anordnung 1 in einer solch niedrigen Höhe, dass die Montage der Rotornabe 31 und der einzelnen Rotorblätter 32 mit vergleichsweise kleinen Kränen erfolgen kann, sodass ein Großkran letztendlich nur für das Anheben des Rotors 30 zur Gondel der Windenergieanlage erforderlich ist.

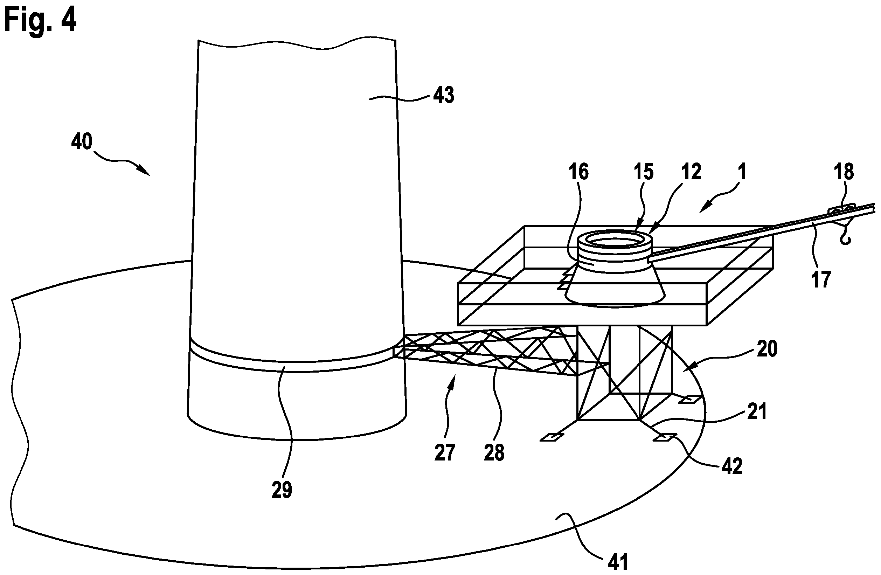

In Figur 4 ist ein zweites Ausführungsbeispiel einer erfindungsgemäßen Anordnung 1 aus Adaptervorrichtung 10 und Turmsystem 20 gezeigt. Diese Anordnung gleicht dabei in weiten Teilen derjenigen aus Figuren 1 bis 3, weshalb auf die dazugehörigen Ausführungen verwiesen und im Folgenden lediglich auf die Unterschiede eingegangen wird.

An dem Rotorflansch 12 der Adaptervorrichtung 10 ist eine Drehvorrichtung 15 befestigt, die eine Drehung einer darauf angeordneten (in Figur 4 nicht dargestellten) Rotornabe 31 um die letztendliche Rotorachse gestattet. Eine entsprechende Drehvorrichtung 15 ermöglicht es, die einzelnen Rotorblätter 32 nacheinander an der Rotornabe 31 zu befestigen, ohne das der für das Anheben der Rotorblätter 32 in Position erforderliche Kran versetzt werden müsste. Vielmehr kann die Rotornabe 31 so gedreht werden, dass sämtliche Rotorblätter 32 des Rotors 30 an jeweils der gleichen Stelle montiert werden können. Das Turmsystem 20 erreicht bei der Ausführungsform gemäß Figur 4 die erforderliche Standfestigkeit nicht durch Ballastierung (vgl. Figuren 1 und 3) sondern vielmehr durch eine Verbindung mit dem Fundament 41 der zu errichtenden Windenergieanlage 40. Dazu sind im Fundament 41 geeignete Anbindungspunkte 42 vorgesehen, mit denen das Grundsegment 21 des Turmsystems 20 verbunden werden kann. Die Anbindungspunkte 42 sind dabei derart auf dem Fundament 41 angeordnet, dass die erfindungsgemäße Anordnung 1 mit der Adaptervorrichtung 10 den Aufbau der Windenergieanlage 40 und insbesondere deren Turm 43 nicht behindert.

Das Turmsystem 20 ist weiterhin über eine Abstützung 27 mit dem bereits errichteten Teil des Turms 43 der Windenergieanlage 40, insbesondere dessen unterstem Segment verbunden. Dazu ist eine Traverse 28 an einem Turmsegment 26 des Turmsystems 20 befestigt, an deren freien Ende sich eine Manschette 29 befindet, die um den Turm 43 der Windenergieanlage 40 gelegt ist. Durch Anziehen der Manschette 29 wird eine kraftleitende Verbindung zwischen Turm 43 und der erfindungsgemäßen Anordnung 1 hergestellt, über die während der Montage entstehende Belastungen der Anordnung 1 wenigstens teilweise abgeleitet werden können.

Die Adaptervorrichtung 10 weist weiterhin einen unmittelbar unterhalb des Rotorflansches 12 drehbar gelagerten Ring 16 auf, der sich in einer Ebene parallel zur Befestigungsoberfläche des Rotorflansches 12 drehen lässt. An dem Ring 16 ist ein Auslegearm 17 befestigt, an dem eine Verschiebevorrichtung 18 angeordnet ist, die entlang der Längsachse des Auslegearms 17 verschiebbar ist. An der Verschiebevorrichtung 18 lässt sich ein Ballastgewicht (nicht dargestellt) anbringen. Durch das Anbringen eines Ballastgewichts an der Verschiebevorrichtung 17 und geeignetes Verschwenken des Auslegearms 17 lassen sich Momente, die während der Montage des Rotors 30 auf die Adaptervorrichtung 10 einwirken, bspw. wenn noch nicht alle Rotorblätter 32 montiert sind, ausgleichen.

Auch wenn bei dem Ausführungsbeispiel in Figur 4 sowohl eine Abstützung 27 als auch ein Auslegearm 17 zur Ballastierung vorgesehen ist, ist im Regelfall bereits eine der beiden Maßnahmen ausreichend, der erfindungsgemäßen Anordnung 1 eine verbesserte Stabilität zu verleihen. Dabei eignet sich die Abstützung 27 insbesondere bei solchen Anordnungen 1, die - wie in Figur 4 gezeigt - unmittelbar auf dem Fundament 41 der zu errichtenden Windenergieanlage 40 angeordnet sind, während sich der Momentenausgleich durch eine Ballastierung an einem Auslegearm 17 insbesondere bei Anordnungen, wie sie bspw. in Figur 1 dargestellt ist, vorteilhaft ist. Ist bei einer entsprechenden Ausführung ein Momentenausgleich durch die Ballastierung an einem Auslegearm 17 vorgesehen, lässt sich regelmäßig die Ballastierung des Grundsegments 21 des Turmsystems 20 reduzieren.

Den Ausführungsbeispielen aus Figuren 1 und 4 ist gemein, dass sich die Adaptervorrichtungen 1 für Transportzwecke auf ein maximales Volumen von 2,5 m x 2,75 m x 10 m zusammenlegen lassen. Dazu sind die Adaptervorrichtungen 1 klapp- und/oder teleskopierbar ausgestaltet.

## Patentansprüche

1. Anordnung (1) umfassend eine Adaptervorrichtung (10) zur horizontalen Vormontage eines Windenergieanlagenrotors (30) und ein Turmsystem (20) eines Hochbaukrans, wobei die Adaptervorrichtung (10) ein Anschlussstück (11) zur Befestigung der Adaptervorrichtung (10) auf dem Turmsystem (20) an der Unterseite der Adaptervorrichtung (10) und einen Rotorflansch (12) zur Befestigung der Rotornabe (31) des zu montierenden Windenergieanlagenrotors (30) auf der Oberseite der Adaptervorrichtung (10) aufweist, wobei zwischen Anschlussstück (11) und Rotorflansch (12) eine den Rotorflansch (12) umgebende Arbeitsplattform (13) vorgesehen ist, wobei die Adaptervorrichtung (10) mit ihrem Anschlussstück (11) auf dem Turmsystem (20) befestigt ist.

2. Anordnung (1) nach Anspruch 1,
**dadurch gekennzeichnet, dass**
das Anschlussstück (11) und der Rotorflansch (12) im Wesentlichen koaxial angeordnet sind.

3. Anordnung (1) nach einem der vorhergehenden Ansprüche,
**dadurch gekennzeichnet, dass**
die Arbeitsplattform (13) HSE-konform ist.

4. Anordnung (1) nach einem der Ansprüche 1 bis 3,
**dadurch gekennzeichnet, dass**
der Rotorflansch (12) gegenüber der Arbeitsplattform (13) derart erhöht angeordnet ist, dass zwischen Rotorflansch (12) und Arbeitsplattform (13) ein Durchgang (14) von der Arbeitsplattform (13) zu einer im Bereich des Anschlussstücks (11) angeordneten Durchstiegsöffnung in der Arbeitsplattform (13) vorgesehen ist.

5. Anordnung (1) nach einem der Ansprüche 1 bis 4,
**dadurch gekennzeichnet, dass**
ein Aufgang (19) von der Arbeitsplattform (13) zum Rotorflansch (12) vorgesehen ist.

6. Anordnung (1) nach einem der vorhergehenden Ansprüche,
**dadurch gekennzeichnet, dass**
die Adaptervorrichtung (10) einen Auslegerarm (17) aufweist, an dem ein Ballastgewicht zur Aufbringung eines Biegemoments auf die Adaptervorrichtung (10) parallel zur Ebene des Rotorflansches (12) befestigbar ist.

7. Anordnung (1) nach Anspruch 6,
**dadurch gekennzeichnet, dass**
der Auslegerarm (17) parallel zur Ebene des Rotorflansches (12) verschwenkbar und/oder in einer, von vorzugsweise mehreren vorgegebenen, Positionen montierbar ist.

8. Anordnung (1) nach Anspruch 6 oder 7,
**dadurch gekennzeichnet, dass**
der Auslegerarm (17) eine Verschiebevorrichtung (18) zur Verschiebung des Ballastgewichtes entlang der Längsachse des Auslegerarms (17) aufweist.

9. Anordnung (1) nach einem der vorhergehenden Ansprüche,
**dadurch gekennzeichnet, dass**
auf dem Rotorflansch (12) eine Drehvorrichtung (15) befestigt ist, an der wiederrum die Rotornabe (31) des zu montierenden Windenergieanlagenrotors (20) befestigbar ist, wobei die Drehvorrichtung (15) eine Drehung der Rotornabe (31) in der Ebene des Rotorflansches (12) gestattet.

10. Anordnung (1) nach einem der vorhergehenden Ansprüche,
**dadurch gekennzeichnet, dass**
die Adaptervorrichtung (10) derart klapp- und/oder teleskopierbar ist, dass sie im zusammengelegten Zustand Außenabmaße von maximal 2,5 m x 2,75 m x 10 m aufweist, vorzugweise dass die Außenabmaße so gewählt sind, dass sich die Adaptervorrichtung in einem 40-Fuß-Standartcontainer, weiter vorzugsweise in einen 20-Fuß-Standartcontainer verladbar ist.

11. Anordnung nach einem der Ansprüche 1 bis 10,
**dadurch gekennzeichnet, dass**
die Standfestigkeit des Turmsystems (20) über eine Ballastierung am Fuß des Turmsystems (10) erreicht wird.

12. Anordnung nach einem der Ansprüche 1 bis 10,
**dadurch gekennzeichnet, dass**
das Turmsystem (20) an dem Fundament (41) der zu errichtenden Windenergieanlage (40) oder einem separat erstellten Fundament befestigt ist.

13. Anordnung nach einem der Ansprüche 1 bis 12,
**dadurch gekennzeichnet, dass**
die Adaptervorrichtung (10) oder das Turmsystem (20) zur Abstützung am wenigstens teilweise bereits errichteten Turm (43) der Windenergieanlage (40) ausgebildet ist.

14. Verwendung einer Anordnung (1) nach einem der Ansprüche 1 bis 13, wobei die Anordnung einen auf der Adaptervorrichtung (10) montierten Windenergieanlagenrotor (30) umfasst, wobei
das Turmsystem (20) so gewählt ist, dass die minimale Durchfahrtshöhe unter dem Windenergieanlagenrotor (30) wenigstens 4,5 m, vorzugsweise wenigstens 8 m, weiter vorzugsweise wenigstens 9,5 m beträgt und/oder die maximale Höhe des auf der Adaptervorrichtung (10) montierten Windenergieanlagenrotors (30) über dem Grund 40 m, vorzugsweise 35 m weiter vorzugsweise 25 m beträgt.

## Claims

1. Arrangement (1) comprising an adapter device (10) for the horizontal preassembly of a wind turbine rotor (30) and a tower system (20) of a tower crane, wherein the adapter device (10) has a connection piece (11) on the underside of the adapter device (10) for fastening the adapter device (10) to the tower system (20) and a rotor flange (12) on the top side of the adapter device (10) for fastening the rotor hub (31) of the wind turbine rotor (30) to be assembled, wherein a work platform (13) that surrounds the rotor flange (12) is provided between the connection piece (11) and rotor flange (12), wherein the adapter device (10) is fastened to the tower system (20) by way of its connection piece (11) .

2. Arrangement (1) according to Claim 1,
**characterized in that**
the connection piece (11) and the rotor flange (12) are arranged substantially coaxially.

3. Arrangement (1) according to either of the preceding claims,
**characterized in that**
the work platform (13) is HSE compliant.

4. Arrangement (1) according to one of Claims 1 to 3,
**characterized in that**
the rotor flange (12) is arranged in an elevated manner with respect to the work platform (13), such that a passage (14) from the work platform (13) to an access opening, arranged in the region of the connection piece (11), in the work platform (13) is provided between the rotor flange (12) and work platform (13).

5. Arrangement (1) according to one of Claims 1 to 4,
**characterized in that**
a staircase (19) from the work platform (13) to the rotor flange (12) is provided.

6. Arrangement (1) according to one of the preceding claims,
**characterized in that**
the adapter device (10) has an extension arm (17) to which a ballast weight for applying a bending moment to the adapter device (10) parallel to the plane of the rotor flange (12) is able to be fastened.

7. Arrangement (1) according to Claim 6,
**characterized in that**
the extension arm (17) is pivotable parallel to the plane of the rotor flange (12) and/or is able to be mounted in one of preferably several predefined positions.

8. Arrangement (1) according to Claim 6 or 7,
**characterized in that**
the extension arm (17) has a displacement device (18) for displacing the ballast weight along the longitudinal axis of the extension arm (17).

9. Arrangement (1) according to one of the preceding claims,
**characterized in that**
a rotating device (15) is fastened to the rotor flange (12), the rotor hub (31) of the wind turbine rotor (20) to be assembled being able to be fastened in turn to said rotating device (15), wherein the rotating device (15) allows the rotor hub (31) to rotate in the plane of the rotor flange (12).

10. Arrangement (1) according to one of the preceding claims,
**characterized in that**
the adapter device (10) is foldable and/or telescopic such that, in the collapsed state, it has external dimensions of at most 2.5 m x 2.75 m x 10 m, preferably that the external dimensions are selected such that the adapter device is loadable in a 40 foot standard container, more preferably in a 20 foot standard container.

11. Arrangement according to one of Claims 1 to 10,
**characterized in that**
the stability of the tower system (20) is achieved via ballasting at the foot of the tower system (10).

12. Arrangement according to one of Claims 1 to 10,
**characterized in that**
the tower system (20) is fastened to the foundation (41) of the wind turbine (40) to be erected or is fastened to a separately constructed foundation.

13. Arrangement according to one of Claims 1 to 12,
**characterized in that**
the adapter device (10) or the tower system (20) is configured to be supported on the at least partially already erected tower (43) of the wind turbine (40).

14. Use of an arrangement (1) according to one of Claims 1 to 13, wherein the arrangement comprises a wind turbine rotor (30) assembled on the adapter device (10), wherein the tower system (20) is selected such that the minimum clearance height under the wind turbine rotor (30) is at least 4.5 m, preferably at least 8 m, more preferably at least 9.5 m and/or the maximum height of the wind turbine rotor (30) assembled on the adapter device (10) above the ground is 40 m, preferably 35 m, more preferably 25 m.

## Revendications

1. Agencement (1), comprenant un dispositif d'adaptation (10) servant au prémontage horizontal d'un rotor d'éolienne (30) et un système de mât (20) d'une grue de chantier, le dispositif d'adaptation (10) présentant une pièce de raccordement (11) servant à fixer le dispositif d'adaptation (10) au système de mât (20) sur la face inférieure du dispositif d'adaptation (10) et une bride de rotor (12) servant à fixer le moyeu de rotor (31) du rotor d'éolienne (30) à monter sur la face supérieure du dispositif d'adaptation (10), une plateforme de travail (13) entourant la bride de rotor (12) étant prévue entre la pièce de raccordement (11) et la bride de rotor (12), le dispositif d'adaptation (10) étant fixé au système de mât (20) par l'intermédiaire de sa pièce de raccordement (11).

2. Agencement (1) selon la revendication 1, **caractérisé en ce que** la pièce de raccordement (11) et la bride de rotor (12) sont disposées de manière substantiellement coaxiale.

3. Agencement (1) selon l'une quelconque des revendications précédentes, **caractérisé en ce que** la plateforme de travail (13) est conforme HSE.

4. Agencement (1) selon l'une quelconque des revendications 1 à 3, **caractérisé en ce que** la bride de rotor (12) est disposée de façon surélevée par rapport à la plateforme de travail (13) de telle sorte qu'entre la bride de rotor (12) et la plateforme de travail (13) un passage (14) de la plateforme de travail (13) à une ouverture d'accès disposée au niveau de la pièce de raccordement (11) est prévue dans la plateforme de travail (13).

5. Agencement (1) selon l'une quelconque des revendications 1 à 4, **caractérisé en ce qu'**un escalier (19) est prévu de la plateforme de travail (13) à la bride de rotor (12).

6. Agencement (1) selon l'une quelconque des revendications précédentes, **caractérisé en ce que** le dispositif d'adaptation (10) présente un bras en porte-à-faux (17) auquel un poids de lestage peut être fixé pour exercer un moment de flexion sur le dispositif d'adaptation (10) en parallèle au plan de la bride de rotor (12).

7. Agencement (1) selon la revendication 6, **caractérisé en ce que** le bras en porte-à-faux (17) est pivotant en parallèle au plan de la bride de rotor (12) et/ou peut être monté dans une, de préférence dans plusieurs positions prédéfinies.

8. Agencement (1) selon la revendication 6 ou 7, **caractérisé en ce que** le bras en porte-à-faux (17) présente un dispositif de déplacement (18) servant à déplacer le poids de lestage le long de l'axe longitudinal du bras en porte-à-faux (17).

9. Agencement (1) selon l'une quelconque des revendications précédentes, **caractérisé en ce qu'**un dispositif rotatif (15) est fixé à la bride de rotor (12), auquel à son tour le moyeu de rotor (31) du rotor d'éolienne (20) à monter peut être fixé, le dispositif rotatif (15) permettant une rotation du moyeu de rotor (31) dans le plan de la bride de rotor (12).

10. Agencement (1) selon l'une quelconque des revendications précédentes, **caractérisé en ce que** le dispositif d'adaptation (10) est rabattable et/ou télescopique de telle sorte qu'à l'état replié, il présente des dimensions extérieures d'un maximum de 2,5 m x 2,75 m x 10 m, de préférence **en ce que** les dimensions extérieures sont sélectionnées de telle sorte que le dispositif d'adaptation peut être chargé dans un conteneur standard 40 pieds, de plus grande préférence dans un conteneur standard 20 pieds.

11. Agencement selon l'une quelconque des revendications 1 à 10, **caractérisé en ce que** la stabilité statique du système de mât (20) est obtenue par l'intermédiaire d'un lestage au pied (10) du système de mât.

12. Agencement selon l'une quelconque des revendications 1 à 10, **caractérisé en ce que** le système de mât (20) est fixé aux fondations (41) de l'éolienne (40) à ériger ou à des fondations créées séparément.

13. Agencement selon l'une quelconque des revendications 1 à 12, **caractérisé en ce que** le dispositif d'adaptation (10) ou le système de mât (20) est réalisé pour prendre appui sur la tour (43) de l'éolienne (40) déjà érigée au moins partiellement.

14. Utilisation d'un agencement (1) selon l'une quelconque des revendications 1 à 13, dans lequel l'agencement comprend un rotor d'éolienne (30) monté sur le dispositif d'adaptation (10), le système de mât (20) étant sélectionné de telle sorte que la hauteur de passage minimale sous le rotor d'éolienne (30) mesure au moins 4,5 m, de préférence au moins 8 m, de plus grande préférence au moins 9,5 m et/ou la hauteur maximale du rotor d'éolienne (30) monté sur le dispositif d'adaptation (10) au-dessus du sol mesure 40 m, de préférence 35 m, de plus grande préférence 25 m.
